# EUROPÄISCHE PATENTSCHRIFT

(11) **EP 2 105 047 B1**
(45) Veröffentlichungstag und Bekanntmachung des Hinweises auf die Patenterteilung: **22.06.2011**
(21) Anmeldenummer: 08005606.2
(22) Anmeldetag: 26.03.2008
(51) Int. Cl.: A01G 9/14, E06B 3/667

(54) **Mehrschichtiges wärmeisolierendes Scheibenelement**
Multi-layer heat insulating pane element
Elément de vitrage d'isolation thermique multicouche

(43) Veröffentlichungstag der Anmeldung: 30.09.2009
(73) Patentinhaber: Rotter, Thomas, 65239 Hochheim-Massenheim (DE)
(72) Erfinder: Rotter, Thomas, 65239 Hochheim-Massenheim (DE)
(74) Vertreter: Mergel, Volker

(56) Entgegenhaltungen:
- DE-A1- 2 802 179
- DE-A1- 3 315 623
- FR-A- 947 077

## Beschreibung

### Gebiet der Erfindung

Die vorliegende Erfindung betrifft ein mehrschichtiges Scheibenelement mit einer geformten Vorsatzscheibe, insbesondere zur Wärmeisolierung von Gewächshäusern.

### Hintergrund der Erfindung

Gewächshäuser werden vor allem in mittleren Breitengraden eingesetzt und erlauben die Bereitstellung eines gleichmäßigeren und im Winter wärmeren Klimas als bei der Freilandkultur. Hierzu werden Gewächshäuser ggfs. beheizt oder in modernen Gewächshäusern im Sommer gekühlt was einen hohen Energieaufwand bedeutet. Die bisherigen Verbesserungen der energetischen Wirtschaftlichkeit von Gewächshäusern sind vornehmlich durch eine kostengünstigere Energiegewinnung oder Verbesserung der Heizanlage gekennzeichnet. Durch bessere Wärmeisolation ist jedoch ein weit höheres Einsparpotenzial zu erreichen.

Es ist bekannt, Stegdoppelplatten und Stegmehrfachplatten aus transparentem Kunststoff sowie Doppelglasscheiben zur verbesserten Isolation von transparenten Gebäuden wie z.B. Gewächshäusern zu verwenden. Weiterhin werden untergezogene Folien sowie spezielle Energieschirmanlagen wie z.B. (AT 503 879 A1) in Gewächshäuser eingebaut.

Stegdoppelplatten haben den Nachteil, dass sie im Laufe von ca. 8-22 Jahren an Durchsichtigkeit und Festigkeit verlieren. Bei der Versicherung von Gebäuden mit einer Eindeckung aus transparenten Kunststoffen wird der Erstattungsbetrag der Versicherungen im Laufe der Produktlebenszeit in einem Zeitraum zwischen 8-22 Jahren, abhängig vom Material, geringer. So sinkt der Erstattungswert von 100% bis auf 0%.

Doppelglasscheiben haben den Nachteil auf Grund des hohen Gewichts eine stärkere Konstruktion der Gewächshäuser zu benötigen. Doppelglasscheiben werden im Gewächshausbau selten verwendet, da das Material sowie die erforderliche Verstärkung der Konstruktion sehr teuer ist.

Energieschirme haben den Nachteil einer teuren Installation auch mit entsprechender Regelung zum Auf- und Zufahren. Die Haltbarkeit liegt zwischen 6-10 Jahren. Bei untergezogenen Folien liegt die Haltbarkeit lediglich bei 2-5 Jahren.

In AT 503 879 A1 wird vorgeschlagen, ein Luftpolster zwischen zwei Energieschirmen oder zwei Folien einzusetzen. Die Haltbarkeit von solchem Material wird von Versicherungen auf bis zu 8 Jahre berechnet. Es ist daher fraglich, wie sich die Isolierwirkung schon nach 4 Jahren reduziert hat. Weiterhin ist der Bereich des Giebels des Gewächshauses bis zum Energieschirm nicht isoliert, was eine erhöhte Heizleistung am Anfang des Tages beim Öffnen des Energieschirmes bedarf.

In der Druckschrift FR 947 077 A wird ein Glaswandelement zur thermischen und akustischen Isolation beschrieben. Das Glaswandelement besteht dabei aus zwei einzelnen Glaswänden. Der Zwischenraum kann isoliert werden. Nachteilig an dem beschriebenen Glaswandelement ist dabei das hohe Eigengewicht. Dies wirkt sich Nachteilig auf die notwendige mechanische Stabilität der Rahmenkonstruktion aus, um derartige Elemente statisch zu befestigen. Auch die Verbindung der beiden Glaselemente ist verfahrenstechnisch aufwendig und kann nicht nachträglich auf beispielsweise Gewächshaus angebracht werden. Das Verfahren ist des Weiteren auf kleinere Abmessungen beschränkt und kann nur mit großem technischem Aufwand auf größere Elemente ausgedehnt werden. Weiter ist eine nachträgliche Applikation auf ein bestehendes Glaselement nicht möglich. Die Scheiben müssen immer als ganzes ausgetauscht werden. Der komplette Austausch der Scheiben ist dabei arbeitstechnisch und finanziell nicht zu unterschätzen.

In der Druckschrift DE 33 15 623 A1 wird ein Verfahren zum Anbringen einer zweiten Glaswand auf dem Glasgiebel eines bestehenden Treibhauses beschrieben. Dabei wird eine zweite Glasscheibe mittels geeigneter Halterungs- und Abstandelemente auf der ersten -der bestehenden-Glasscheibe befestigt. Die Halterungs- bzw. Abstandelemente werden dabei auf der ersten Scheibe aufgeklebt. Der sich ergebende Zwischenraum d.h. der Umfangsrand der Glasscheibenanordnung wird mittels Kitt isoliert. Nachteilig ist dabei der große Verfahrensaufwand um die Glasscheibenanordnung herzustellen. Ebenso wird keine optimale Isolierung erreicht, da der Zwischenraum nicht vakuumisoliert wird. Eine derartige Isolierung ist auch nicht beschrieben. Weiter noch könnte das Verfahren für größere Scheibenelemente nicht angewandt werden, da die Scheiben bei typischer Dicke dem Umgebungsdruck nicht standhalten könnten. Ebenso wären die beschriebenen Halterungs- bzw. Abstandselemente aus mechanischer Sicht nicht in der Lage die hohen statischen Belastungen Widerstand zu leisten.

Eine Durchbiegung der zweiten Glasscheibe in der Mitte würde zusätzliche Probleme verursachen. Auch ergibt sich aufgrund der Verwendung von Glas als zweite Glaswand ein hohes Gewicht der Glasscheibenanordnung. Im schlechtesten Fall, kann das in der DE 33 15 623 A1 beschriebene Verfahren nicht eingesetzt werden, da baustatische Einschränkungen der Rahmenkonstruktion eine Applikation verhindern. Nachteilig ist des Weiteren auch, dass das Verfahren ohne weitere Vorrichtungen nur auf gekippten (d.h. aus der vertikalen in Richtung der horizontalen Ebene geneigten) Scheiben angebracht werden kann, da die Abstützung der zweiten Glaswand auf der ersten Glaswand auf der Gravitation beruht. Folglich können Treibhäuser mit parallelen oder in die falsche Richtung geneigten Glasfronten mit dem beschriebenen Verfahren nicht aus- bzw. nachgerüstet werden und schränken somit den Einsatzbereich des Verfahrens ein. Eine derartige Anordnung kann aber unter Umständen thermische und/oder konstruktive Vorteile aufweisen.

Ferner ist Vakuumisolierglas (VIG) bekannt. Hierbei werden zwischen zwei Glasscheiben einzelne Pfeiler angeordnet. Nachteilig hierbei sind ebenfalls hohes Gewicht und Kosten. Ferner ist die vakuumdichte Verbindung von zwei FloatglasScheiben schwierig.

### Allgemeine Beschreibung der Erfindung

Der vorliegenden Erfindung liegt daher die Aufgabe zugrunde eine Scheibenanordnung bereit zu stellen, die eine hohe Wärmeisolationsfähigkeit und ein geringes Gewicht besitzt sowie kostengünstig und langlebig ist.

Ferner ist es eine Aufgabe der Erfindung, ein Isolationssystem bereit zu stellen, das sich für Gewächshäuser eignet und mit dem die Wärmeisolation von bereits bestehenden Gewächshäusern im Wege der Nachrüstung verbessert werden kann.

Die Aufgabe der Erfindung wird durch den Gegenstand der unabhängigen Ansprüche gelöst. Vorteilhafte Weiterbildungen der Erfindung sind in den Unteransprüchen definiert.

Erfindungsgemäß wird ein mehrschichtiges wärmeisolierendes Scheibenelement zum Bau von Wand- und/oder Dachflächen eines Gewächshauses bereitgestellt. Das Scheibenelement wird durch eine zumindest Doppelscheibenanordnung aus einer ersten Scheibe, z.B. eine herkömmliche plane Floatglas-Scheibe und eine speziell geformte Vorsatzscheibe, die vakummdichht mit der ersten Scheibe verbunden ist gebildet. Das Gewächshaus umfasst demnach eine herkömmliche Rahmenkostruktion im Wand und Deckenbereich, in welche eine Vielzahl dieser Doppelscheibenanordnungen eingesetzt sind, um die Wände und die Decke des Gewächshauses zu bilden.

Die lichtdurchlässige Vorsatzscheibe ist konstruktiv so geformt, das die Luft zwischen der Vorsatzscheibe und der ersten Scheibe evakuiert werden kann. Die Vorsatzscheibe weist hierzu eine wannenartige Form mit einem inneren Fensterbereich und einen um den Fensterbereich umlaufenden Randbereich auf, welcher einen Befestigungsrand bildet. Der Randbereich besitzt demnach einen äußeren Dichtrahmen mit einer umlaufenden Dichtfläche und einen den Dichtrahmen mit dem Fensterbereich verbindenden Verbindungsrahmen, wobei sich der Verbindungsrahmen senkrecht oder schräg zu der Scheibenebene erstreckt, so dass der Fensterbereich und die Dichtfläche parallel versetzt in Bezug auf die Scheibenebene verlaufen und der Fensterbereich größtenteils von der ersten Scheibe beabstandet ist. Dadurch wird in dem Fensterbereich ein zwischen der ersten Scheibe und der Vorsatzscheibe sandwichartig eingeschlossener Hohlraum gebildet.

Die geschlossen umlaufende Dichtfläche des Befestigungsrandes ist vollständig umlaufend hermetisch mit der ersten Scheibe verbunden, so dass der Hohlraum zwischen der ersten Scheibe und der Vorsatzscheibe vakuumdicht verschlossen ist, wenn die Dichtfläche der Vorsatzscheibe mit der ersten Scheibe z.B. verklebt ist.

Schwierig ist unter anderem, eine ausreichende Stabilität zu erreichen, da derartige Scheiben, bzw. Fensteranordnungen naturgemäß eine große Fläche besitzen und daher ein großer Druck auf die Scheiben einwirkt, wenn der Hohlraum evakuiert ist. Der Druck ist proportional zur Gasdruckdifferenz zwischen dem Hohlraum und der äußeren Atmosphäre, d.h. bei vollständiger Evakuierung etwa 10⁵ Nm⁻². Das entspricht etwa 10 Tonnen pro Quadratmeter.

Daher werden die erste Scheibe und die Vorsatzscheibe durch eine Vielzahl von Stützelementen, die in einem Raster über den inneren Fensterbereich der Vorsatzscheibe verteilt sind gegeneinander abgestützt, um dem Außendruck standzuhalten und ein Kollabieren zu verhindern.

Es ist nun besonders vorteilhaft, die Stützelemente, den Verbindungsrahmen und die Dichtfläche einstückig mit der Vorsatzscheibe auszubilden, wobei die Vorsatzscheibe als ein Kunststoffformteil mit integraler Stützstruktur ausgebildet ist. Die Stützelemente erstrecken sich demnach pfeilerartig quer zu der Scheibenebene integral aus der Vorsatzscheibe heraus. Somit wird ein integral mit der Vorsatzscheibe geformtes Stützraster gebildet, wobei die Stützelemente einen vordefinierten Maximalabstand einhalten, um dem äußeren Atmosphärendruck standzuhalten. Das integrale Stützraster unterteilt den Fensterbereich in Zellen an deren Ecken sich die Stützelemente befinden, wobei die Zellen nicht hermetisch voneinander isoliert sind, sondern zwischen den Stützelementen miteinander verbunden sind, um Luftaustausch zwischen den Zellen zu ermöglichen, damit alle Zellen einheitlich evakuiert werden können.

Insbesondere wird die Vorsatzscheibe durch Verformung einer gewöhnlichen planen dünnen lichtdurchlässigen Kunststoffplatte hergestellt, z.B. tiefgezogen. Hierbei werden also die Stützelemente, der Verbindungsrahmen und/oder die Dichtfläche aus einer einzigen verformbaren Platte integral ausgeformt, wobei die Stützelemente in Form von Hohlpfeilern gebildet werden. Hierfür eignen sich insbesondere dünne thermoplastische Kunststoffplatten z.B. PMMA-, PVC-, Polycarbonat-, oder PET-Platten. Bei PET wird die nicht-kristallisierende Variante des Polyethylenteraphthalats, das sogenannte PETG bevorzugt. Die Vorsatzscheibe kann aber auch z.B. aus Epoxid, Polyester oder Glasfaserkunststoff einstückig hergestellt sein. Die Vorsatzscheibe weist demnach bevorzugt eine auf einer Seite der Vorsatzscheibe hervorragende integrale Stützstruktur auf, welche auf der anderen Seite der Vorsatzscheibe entsprechend negativ eingeprägt ist.

Die Stabilität der Vorsatzscheibe wird hauptsächlich durch die Plattendicke und den Stützraster-Abstand definiert. Die Dicke der Kunststoffplatte sollte vorzugsweise etwa zwischen 0,5 mm und 5 mm liegen und der Stützrasterabstand sollte vorzugsweise nicht größer als etwa 6 cm sein, um eine ausreichende Stabilität zu gewährleisten. Bei 1,5 mm PMMA wird ein Stützrasterabstand von 4 cm vorgeschlagen. Bei 4 cm x 4 cm Fläche pro Rasterelement und angenommen vollständiger Evakuierung beträgt die Kraft etwa 160 N (entspricht etwa 16 kg) pro Rasterelement oder Zelle. Dadurch können Doppelscheibenanordnungen von nahezu unbegrenzter Größe hergestellt werden, zumindest sind Anordnungen von der Größe typischer Glasscheiben in Gewächshäusern oder Fenstern (im Bereich 1 qm oder mehr) herstellbar.

Wenn die erste Scheibe und die Vorsatzscheibe hermetisch miteinander verbunden sind, wird der Hohlraum zwischen den beiden Scheiben evakuiert, wobei das Stützraster die Vorsatzscheibe gegen die Glasscheibe abstützt. Es ist ersichtlich, dass "Evakuieren" in diesem Sinne nicht zwingend vollständiges Evakuieren bedeuten muss, sondern dass je nach Anforderung und Stabilität der Vorsatzscheibe auch ein Teilevakuieren, z.B. auf einen Innendruck von einigen hundert hPa oder auch einen anderen Innendruck ausreichen kann.

Die Vorsatzscheibe ist für die Anwendung in einem Treibhaus vorzugsweise aus einem klar transparenten Kunststoff. Bei Verwendung einer klar transparenten Kunststoffplatte sind die Deckflächen der Zellen also vorzugsweise ebenfalls klar transparent, so dass die Doppelscheibenanordnung im Großen und Ganzen noch einen relativ klar transparenten Fenster-Eindruck, insbesondere ein Durchblicken der Doppelscheibenananordnung ermöglicht. Die etwas reduzierte Klarheit der erfindungsgemäßen Doppelscheibenananordnung aufgrund der Struktur der Vorsatzscheibe im Vergleich zu einer glatten Floatglas-Scheibe ist bei einem Gewächshaus kein allzu großer Nachteil. Für bestimmte Anwendungen kann es sogar vorteilhaft sein, einen opaken Kunststoff zu verwenden, um eine Lichtstreuung und damit gleichmäßige Beleuchtung zu erreichen oder ein Durchschauen an Seitenwänden zu verhindern. Je nach Anforderung kann die erfindungsgemäße Vorsatzscheibe aber auch an Fenstern oder Fensterfronten von Hallen und normalen Gebäuden eingesetzt werden.

In vorteilhafter Weise wird die Wärmeleitfähigkeit durch die Evakuierung erheblich reduziert, so dass die erfindungsgemäße Doppelscheibenanordnung einen geringen U-Wert besitzt. Das Prinzip entspricht dem einer Isolierkanne. Übliche Einfachverglasungen von Gewächshäusern besitzen einen U-Wert von etwa 5,7 W/(m²K). Vorzugsweise besitzt die Doppelscheibenanordnung einen U-Wert von kleiner als 3 W/(m²K). Als Zusatznutzen wird auch die Schallisolierung verbessert.

Mit Hilfe der vorliegenden Erfindung kann eine Energieeinsparung von Gewächshäusern im Vergleich zu Einfachglas mit einem Energieschirm je nach Ausführung bis zu 80 % oder mehr betragen.

Da im Sommer auch die Wärme isoliert wird, spart man weitere Energie für die Erhöhung der Luftfeuchte etwa mit entmineralisiertem Wasser sowie für das Lüften bei übermäßiger Wärme. Bei Neubauten ist es möglich, die Lüftung durch Wärmeaustausch mit einem Wärmespeicher zu ersetzen. Eine Energiegewinnung für den relativ niedrigen Energiebedarf im Frühsommer und Spätsommer ist somit möglich. Die Nutzung des "Glashauseffektes" vor allem im Frühjahr sowie im Spätherbst, bei zwar niedrigen Außentemperaturen, aber guter Sonneneinstrahlung wird durch die Vorsatzscheibe nicht oder nur wenig beeinträchtigt. Die Wärmeleitfähigkeit des Restgases zwischen den beiden Scheiben wird je nach Qualität des Vakuums reduziert und die Wärmekonvektion eingeschränkt. Die Wärmestrahlung kann weiterhin mit Hilfe des Energieschirmes gesteuert werden.

Das zusätzliche Gewicht durch die Vorsatzscheibe, ausgeformt aus einer dünnen Kunststoffplatte beträgt bei Verwendung einer 1,5 mm PMMA-Platte etwa 1,7 kg/m² und bei einer 1 mm PVC-Platte etwa 1,4 kg/m². Das Gesamtgewicht der Vorsatzscheibe sollte demnach etwa im Bereich zwischen 1 kg/m² und 10 kg/m² liegen.

Die Vorsatzscheibe kann unter glattes Glas nachgerüstet werden und die Anordnung ist einfach mit Hilfe einer Vakuumpumpe zu evakuieren. An der Konstruktion des Gewächshauses, insbesondere der Rahmenkonstruktion ändert sich nichts.

Problematisch bei Verwendung von Kunststoffen kann deren UV-Empfindlichkeit sein. Daher wird bevorzugt, die Vorsatzscheibe auf der sonnenabgewandten Seite der Glasscheibe, d.h. auf der Innenseite des Gewächshauses anzubringen. Da durch das Glas die UV-Strahlung wesentlich vermindert ist, altert die Kunststoffvorsatzscheibe langsamer als Kunststoff, der unmittelbar der Sonneneinstrahlung ausgesetzt ist.

Vorzugsweise ist lediglich der Rand der Glasscheibe in der Rahmenkonstruktion des Gewächshauses eingefasst. Die Vorsatzscheibe ist etwas kleiner als die Glasscheibe und wird lediglich auf die Glasscheibe aufgeklebt, nicht jedoch selbst von der Rahmenkonstruktion gefasst. Die Vorsatzscheibe besitzt also eine Größe die zumindest geringfügig kleiner ist als der jeweilige Ausschnitt der Rahmenkonstruktion, um die Vorsatzscheibe nachträglich in die Rahmenkonstruktion einzufügen. Es ist auch möglich, mehrere Vorsatzscheiben als Teilelemente auf eine Glasscheibe aufzukleben.

Ein besonderer Vorzug der Erfindung ist daher die Nachrüstbarkeit von bereits in einem Gewächshaus eingebauten Einfachverglasungen vor Ort. Hierfür wird die Vorsatzscheibe vorzugsweise von innen an die in der Rahmenkonstruktion des Gewächshauses eingebaute Glasscheibe befestigt, in dem der die Vorsatzscheibe randseitig begrenzende Dichtrahmen mit der Glasscheibe hermetisch verklebt wird. Hierfür eignen sich z.B. Kontaktkleber, die eine hinreichende und dauerhafte Dichtigkeit gewähren. Anschließend wird eine Vakuumpumpe an einen Absaugstutzen angeschlossen und der Hohlraum evakuiert. Besonders einfach ist es, den Absaugstutzen ebenfalls integral aus der Vorsatzscheibe auszuformen und diesen nach Beendigung der Evakuierung thermoplastisch zu verschmelzen. Es kann aber auch ein mehrfach verwendbares Vakuumventil eingebaut werden, was den Vorteil hat, dass von Zeit zu Zeit nachevakuiert werden kann, falls dies erforderlich sein sollte. Es ist auch denkbar, eine Mehrzahl von Doppelscheibenanordnungen vakuummäßig miteinander zu verbinden und mit einer einzigen Vakuumpumpe zu verbinden. In diesem Fall kann die Isolationswirkung durch gezieltes Belüften und Evakuieren sogar nach Bedarf geregelt werden.

Für die Montage kann es vorteilhaft sein, die Stützelemente senkrecht zur Scheibenebene gegenüber der Dichtfläche etwas zurückgesetzt auszubilden. Dadurch kann bei der Montage der Kleber auf den Stützrand aufgebracht werden und die Vorsatzscheibe an die Glasscheibe leicht angedrückt werden. In diesem Zustand berühren dann die Stützelemente noch nicht die erste Glasscheibe. Wird nun zumindest etwas evakuiert, saugt sich die Vorsatzscheibe an die Glasscheibe heran bis die Stützelemente an die Glasscheibe gepresst werden und sich dort abstützen, wobei der Klebstoff kraftbeaufschlagt bzw. komprimiert wird. Dies gewährleistet eine gute hermetische Verklebung und einen hohen Anpressdruck des Klebstoffes, der besonders bei der Verwendung eines Kontaktklebers vorteilhaft ist.

Ferner bevorzugt ist es, in dem Fensterbereich zusätzliche integrale Stabilisierungsrippen aus der Vorsatzscheibe auszuformen, welche sich parallel zu der Scheibenebene erstrecken und z.B. ein zweidimensional gekreuztes Liniengitter in der Scheibenebene bilden. Das Liniengitter aus Stabilisierungsrippen unterteilt demnach den Fensterbereich in eine Vielzahl von Feldern oder Zellen, liegt aber auch in dem evakuierten Zustand zumindest nicht vollständig an der ersten Scheibe an, damit die Hohlraumzellen der jeweiligen Fensterfelder miteinander verbunden sind. Somit wird ein einheitlicher Hohlraum gewährleistest, der als Ganzes evakuiert werden kann. Die Stabilisierungsrippen sorgen für eine zusätzliche Stabilität der Vorsatzscheibe und sind ebenfalls einstückig aus der Kunststoffplatte ausgeformt. Das Liniengitter kann z.B. als quadratisches Schachbrettmuster ausgebildet sein, kann aber auch eine andere, z.B. hexagonale Form besitzen.

In einer bevorzugten Ausführungsform sind die Stützelemente an den Kreuzungsstellen des Liniengitters angeordnet, so dass eine zweidimensional gekreuzte Brückenstruktur gebildet wird, wobei die Stützelemente als Brückenpfeiler und die Stabilisierungsrippen als Brückenbögen zwischen den Brückenpfeilern wirken. Die Stützelemente können aber auch innerhalb der Fensterfelder liegen.

Weitere Stabilität kann dadurch erreicht werden, dass die Vorsatzscheibe in den Feldern jeweils feldweise gewölbt ist. Die Wölbung ist je nach Material nach innen oder außen ausgebildet (Zug- oder Druckgewölbe).

Durch die Ausformung der Stützelemente und ggfs. Stabilisierungsrippen aus dünnem Plattenmaterial entstehen auf der der Glasscheibe abgewandten Seite Vertiefungen in Form einer Negativform der Stützelemente und ggfs. der Stabilisierungsrippen. Diese Vertiefungen können unter anderem gegen Eindringen von Schmutz geschützt werden, dadurch dass auf der der ersten Scheibe abgewandte Rückseite der Vorsatzscheibe eine zusätzliche Platte oder Folie aufgebracht wird. Der Zwischenraum zwischen der zusätzlichen Platte oder Folie und der Vorsatzscheibe kann, falls gewünscht, ebenfalls evakuiert werden. Hierzu kann eine Öffnung in der Vorsatzscheibe vorgesehen sein, so dass die beiden Hohlräume miteinander verbunden sind. Die zusätzliche Platte oder Folie wird in diesem Fall hermetisch mit der Rückseite der Vorsatzscheibe und zwar vorzugsweise an dem Rücken des umlaufenden Randbereichs der Vorsatzscheibe aufgeklebt.

Die Vorsatzscheibe kann ferner Verbindungselemente umfassen, mit denen mehrere Vorsatzscheiben auf einer Glasscheibe aneinandergereiht werden können. Ferner kann die Vorsatzscheibe im Ganzen eine gekrümmte Form besitzen, um an gebogene Scheiben angepasst zu sein.

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind und die Merkmale der verschiedenen Ausführungsbeispiele miteinander kombiniert werden können.

### Kurzbeschreibung der Figuren

Es zeigen:
- **Fig. 1**: eine teilweise aufgebrochene perspektivische Darstellung einer ersten Ausführungsform der Erfindung,
- **Fig. 2**: einen Querschnitt entlang der Linie 2-2 in **Fig. 1****,**
- **Fig. 3**: einen Querschnitt entlang der Linie 3-3 in **Fig. 1****,**
- **Fig. 4**: eine Ausschnittsvergrößerung des Bereichs 4 aus **Fig. 3****,**
- **Fig. 5**: eine teilweise aufgebrochene perspektivische Darstellung einer zweiten Ausführungsform der Erfindung,
- **Fig. 6**: einen Querschnitt entlang der Linie 6-6 in **Fig. 5****,**
- **Fig. 7**: einen Querschnitt durch eine abgewandelte Ausführungsform,
- **Fig. 8**: eine teilweise aufgebrochene perspektivische Darstellung einer weiteren Ausführungsform der Erfindung,
- **Fig. 9**: einen Querschnitt entlang der Linie 9-9 in **Fig. 8****.**

### Detaillierte Beschreibung der Erfindung

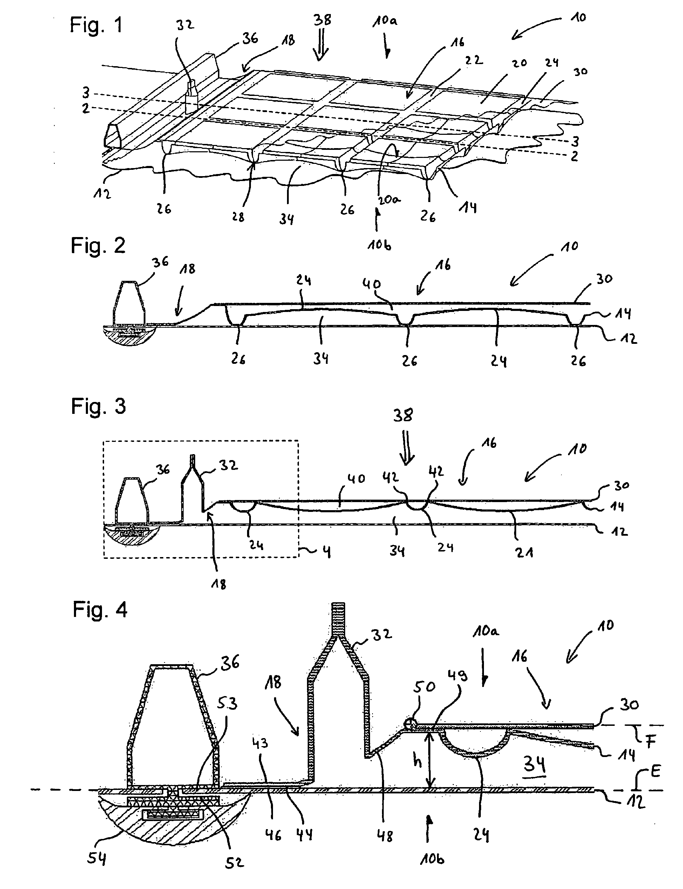

Bezug nehmend auf **Fig. 1** weist das mehrschichtige wärmeisolierende Scheibenelement 10 eine gewöhnliche plane Floatglas-Scheibe 12 mit einer Dicke von typischerweise 2 mm bis 4 mm auf. Auf die Floatglas-Scheibe 12 ist die erfindungsgemäße Vorsatzscheibe 14 in den Figuren von oben aufgeklebt. Es ist zu beachten, dass die in den Figuren dargestellte Oberseite 10a in der Realität der Innenseite des Gewächshauses entspricht, d. h. z. B. bezogen auf Dachflächen, dass die in den Figuren gezeigte Oberseite 10a in der Realität schräg nach unten weist. Demnach befindet sich die Vorsatzscheibe 14 auf der der Außenseite 10b, welche die Seite der Sonneneinstrahlung repräsentiert, abgewandten Seite 10a.

Die Vorsatzscheibe 14 weist einen inneren Fensterbereich 16 und einen um den Fensterbereich 16 umlaufenden Befestigungsrand 18 auf. Der Fensterbereich 16 ist unterteilt in eine Vielzahl von in diesem Beispiel quadratischen Feldern oder Zellen 20, welche durch ein Gitter 22 von in Richtung der Floatglas-Scheibe 12 eingeprägten Sicken oder sich längs und quer gekreuzt erstreckenden Vertiefungen 24 gebildet werden. Die in Richtung der Floatglas-Scheibe 12 ausgeformten Sicken 24 bilden Stabilisierungsrippen.

Die Deckseite 20a der Zellen 20 ist bei dieser Ausführungsform leicht in Richtung der Floatglas-Scheibe 12 gewölbt. An den Kreuzungspunkten des Stabilisierungsgitters 22 sind jeweils Stützelemente 26 in Richtung der Floatglas-Scheibe 12 ausgeformt, welche in diesem Beispiel ein quadratisches Punktraster 28 bilden.

Der Fensterbereich 16 der Vorsatzscheibe 14 ist durch eine auf den Randbereich 18 aufgeklebte Deckplatte 30 abgedeckt. Auf einer Seite des Randbereichs 18 ist ein verschlossener Absaugstutzen 32 angeordnet, durch welchen der Hohlraum 34 zwischen der Vorsatzscheibe 14 und der Floatglas-Scheibe 12 evakuiert wurde. Die Scheibenanordnung 10 ist umlaufend von Rahmenprofilen 36 eingefasst, die eine Rahmenkonstruktion bilden, welche die gesamte Anordnung in Position hält.

Bezug nehmend auf **Fig. 2** stützen sich die Stützelemente 26 auf der Floatglas-Scheibe 12 gegen den äußeren Atmosphärendruck, welcher mit Pfeil 38 angedeutet ist, aufgrund der Evakuierung des Hohlraums 34 ab. Die Stabilisierungsrippen 24 verlaufen brückenartig zwischen den Stützelementen 26. Der durch die Wölbung 21 der Zellen 20 und die Vertiefungen der Stabilisierungsrippen 24 und Stützelemente 26 zwischen der Vorsatzscheibe 14 und der Deckplatte 30 gebildete Hohlraum 40 ist in diesem Beispiel nicht evakuiert. Er kann jedoch auch evakuiert werden, da sich die Abdeckplatte 30 an den Begrenzungsrändern 42 der Zellen 20 hinreichend abstützen kann, wie in **Fig. 3** dargestellt ist.

Bezug nehmend auf **Fig. 4** weist der umlaufende Randbereich 18 der Vorsatzscheibe 14 einen randseitig umlaufenden Dichtrahmen 43 mit einer Dichtfläche 44 auf, welche in diesem Beispiel mit einem Kontaktkleber 46 umlaufend flächig mit der Floatglas-Scheibe 12 vakuumdicht verklebt ist. Ferner weist der Randbereich 18 einen umlaufenden Zwischen- oder Verbindungsrahmen 48 auf, welcher die Dichtfläche 44 mit dem Fensterbereich 16 umlaufend vakuumdicht verbindet. Der Verbindungsrahmen 48 erhebt sich in diesem Beispiel schräg zur Ebene E der Floatglas-Scheibe 12. Hierdurch wird der Höhenversatz h zwischen dem Fensterbereich 16 und der Dichtfläche 44 geschaffen, welcher die Ebene F des Fensterbereichs 16 von der Floatglas-Scheibe 12 parallel beabstandet, um den evakuierbaren Hohlraum 34 zu bilden.

Der Randbereich 18 weist ferner einen in der Ebene F verlaufenden Rücken in Form eines Deckrahmens 49 auf, auf dem die Deckplatte 30 mit Klebstoff 50 umlaufend aufgeklebt ist. Da es sich hier um eine Kunststoff-Kunststoff-Verbindung handelt, sind auch andere Verbindungsverfahren, wie z. B. Schweißen denkbar.

Das Rahmenprofil 36 weist eine Haltenut 52 auf, in die die Floatglas-Scheibe 12 eingesetzt und in herkömmlicher Weise befestigt ist. Somit bildet der Rand der Floatglas-Scheibe den Einbaurand 53 der Doppelscheibenanordnung. Die Vorsatzscheibe 14 ist kleiner als die Floatglas-Scheibe 12 ausgebildet, so dass die Vorsatzscheibe 14 in die durch die Rahmenprofile 36 gebildete Rahmenkonstruktion nachträglich einsetzbar sind. D.h. die Vorsatzscheibe 14 braucht demnach nicht in die Haltenut 52 eingeführt zu werden, sondern wird nur mittels des Klebstoffes 46 und des Atmosphärendruckes auf der Floatglas-Scheibe 12 gehalten. Eine herkömmliche Abdeckmanschette 54 schützt das Rahmenprofil 36 sowie die Haltenuten 52 vor dem Eindringen von Schmutz und Feuchtigkeit, da es sich bei der Unterseite 10b um die Außenseite des Gewächshauses handelt.

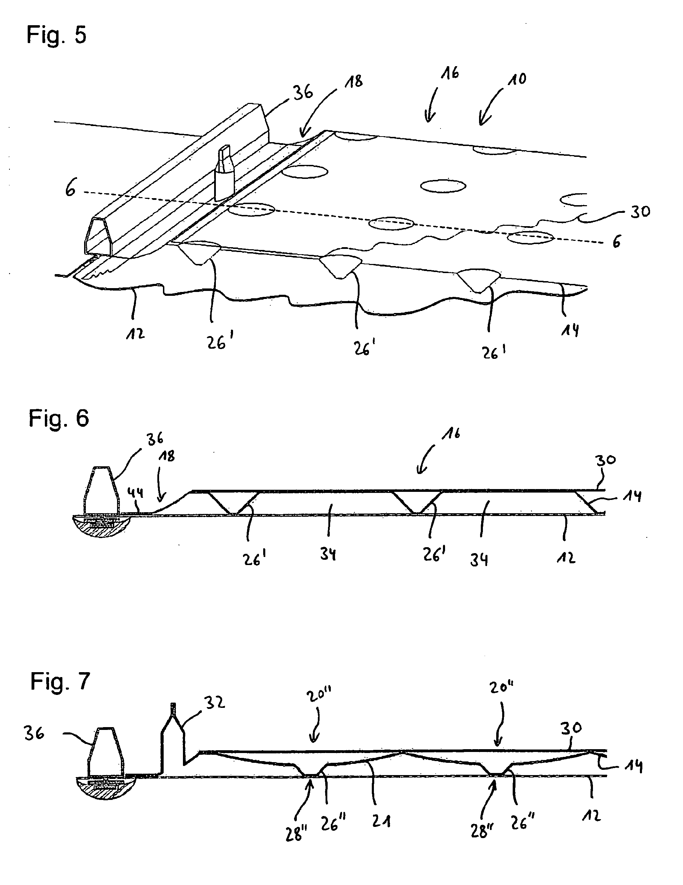

Bezug nehmend auf **Fig. 5** ist eine weitere Ausführungsform der Erfindung dargestellt, bei welcher die Stützelemente 26' kegelstumpfförmig in Richtung der Floatglas-Scheibe 12 in das Plattenmaterial der Vorsatzscheibe 14 eingeprägt sind. Bei dieser Ausführungsform wird auf die Stabilisierungsrippen 24 und die Wölbung 21 des Fensterbereichs 16 verzichtet, wie am besten in **Fig. 6** zu erkennen ist.

**Fig. 7** zeigt eine weitere Ausführungsform der Erfindung, bei welcher die Vorsatzscheibe 14 abermals zellenweise nach Innen gewölbt 21 ist und die Stützelemente 26" des Stützrasters 28" sich jeweils innerhalb jeder Zelle 20" mit gewölbter Deckfläche befindet.

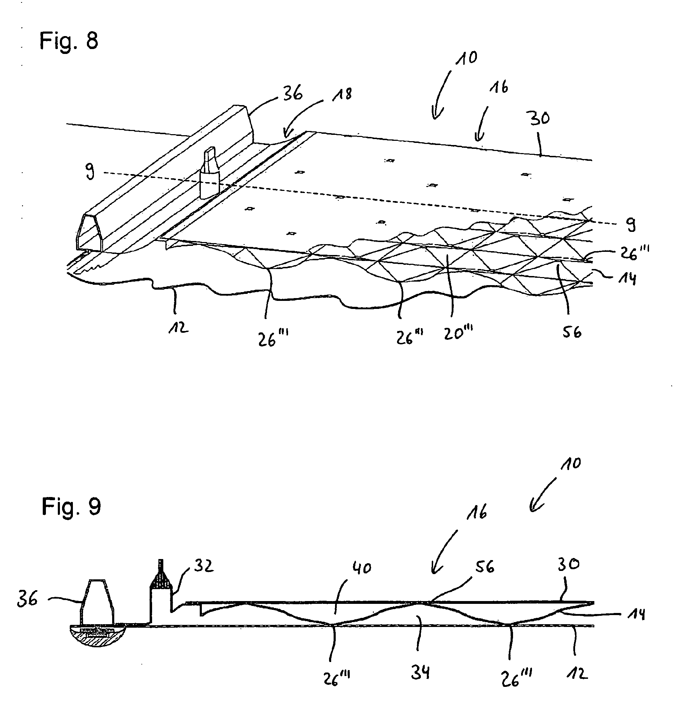

Bezug nehmend auf **Fig. 8** ist eine weitere Ausführungsform der Erfindung dargestellt, bei welcher der Fensterbereich 16 der Vorsatzscheibe 14 abwechselnd zur Floatglas-Scheibe hin und von der Floatglas-Scheibe 12 weg pyramidenstumpfförmig ausgeformt ist. Die pyramidenstumpfartige Ausformung unterteilt den Fensterbereich 16 ebenfalls in Felder oder Zellen 20"'. Die abgestumpften Spitzen der in Richtung der Floatglas-Scheibe 12 ausgeformten Pyramidenstümpfe bilden die Stützelemente 26"', welche die Vorsatzscheibe 14 gegen die Floatglas-Scheibe 12 abstützen. Bei dieser Ausführungsform bilden die von der Floatglas-Scheibe 12 wegweisenden Erhebungen 56 ebenfalls in Form von Pyramidenstümpfen ein punktuelles Stützraster für die Deckplatte 30.

Allen Ausführungsformen ist gemein, dass die Vorsatzscheibe 14 als ein schichtartiges Kunststoffformteil ausgebildet, beziehungsweise integral aus einer Kunststoffplatte ausgeformt wurde, so dass z. B. die Stützelemente 26 bis 26"' aus der Kunststoffplatte, aus der die Vorsatzscheibe 14 hergestellt ist, ausgeformt oder geprägt sind. Die Vorsatzscheibe 14 besitzt jeweils eine wannenartige Form, bei der der Fensterbereich 16 den Wannenboden und der Verbindungsrahmen 48 den sich aus der Ebene F des Wannenbodens heraus erstreckenden Wannenrand definiert. Die wannenartige Form definiert ein von dem Fensterbereich 16 und umlaufend von dem Verbindungsrahmen 48 begrenztes Volumen, welches den zu evakuierenden Hohlraum 34 bildet. Demnach bildet die Vorsatzscheibe 14 mit dem Fensterbereich 16, der von dem Stützraster 28 bis 28"' gegen die Floatglas-Scheibe 12 abgestützt wird sowie dem Randbereich 18 ein wannen- oder schalenartiges Kunststoffformteil, bei welchem die Stützelemente 26 bis 26"', der Verbindungsrahmen 48 und der Dichtrahmen 43 integral mit dem Fensterbereich 16 hergestellt sind. Durch die Ausformung der Elemente 18, 24, 26 bis 26"', 43, 44, 48 aus einer dünnen Platte spiegelt sich die der Floatglas-Scheibe 12 zugewandte Positionsstruktur als Negativstruktur an der Oberseite 10a wieder.

Es ist dem Fachmann ersichtlich, dass die vorstehend beschriebenen Ausführungsformen beispielhaft zu verstehen sind, und die Erfindung nicht auf diese beschränkt ist, sondern in vielfältiger Weise variiert werden kann, ohne die Erfindung zu verlassen.

## Patentansprüche

1. Mehrschichtiges wärmeisolierendes Scheibenelement (10), insbesondere zum Einbau in die Rahmenkonstruktion (36) eines Gewächshauses, um die Wand- und/oder Dachflächen des Gewächshauses zu bilden, umfassend:
eine erste Scheibe (12) und
eine Vorsatzscheibe (14) auf zumindest einer Seite der ersten Scheibe (12), so dass zumindest eine Doppelscheibenanordnung gebildet wird,
**gekennzeichnet dadurch, dass** die Doppelscheibenanordnung einen Einbaurand (53) aufweist, welcher in der Rahmenkonstruktion (36) eingefasst und befestigt werden kann und in dem eingebauten Zustand von der Rahmenkonstruktion (36) gehalten wird,
dass die Vorsatzscheibe (14) eine wannenartige Form mit einem inneren Fensterbereich (16) und einen um den Fensterbereich umlaufenden Randbereich (18) bildet, dass der Randbereich (18) einen Dichtrahmen (43) mit einer umlaufenden Dichtfläche (44) und einen den Dichtrahmen (43) mit dem Fensterbereich (16) verbindenden Verbindungsrahmen (48) aufweist, dass sich der Verbindungsrahmen (48) senkrecht oder schräg zu der Scheibenebene (E) erstreckt, so dass der Fensterbereich (16) parallel versetzt in Bezug auf die Scheibenebene (E) verläuft und der Fensterbereich (16) größtenteils von der ersten Scheibe (12) beabstandet ist, so dass in dem Fensterbereich (16) ein Hohlraum (34) zwischen der ersten Scheibe (12) und der Vorsatzscheibe (14) sandwichartig eingeschlossen ist,
dass die Dichtfläche (44) vollständig umlaufend hermetisch mit der ersten Scheibe (12) verbunden ist, so dass der Hohlraum (34) zwischen der ersten Scheibe (12) und der Vorsatzscheibe (14) vakuumdicht verschlossen ist,
dass der Fensterbereich (16) eine Vielzahl von aus der Ebene (F) des Fensterbereichs hervorspringenden Stützelementen (26, 26' , 26" , 26"') aufweist, und
dass die Vorsatzscheibe (14) als ein Kunststoffformteil ausgebildet ist und die Stützelemente in Richtung der ersten Scheibe (12) integral mit der Vorsatzscheibe (14) geformt sind und ein Stützraster (28) mit einem vordefinierten Maximalabstand zwischen den Stützelementen bilden,
und dass der Hohlraum (34) evakuiert ist und das Stützraster (28) der Vorsatzscheibe die Vorsatzscheibe (14) und die erste Scheibe (12) gegeneinander stabil gegen ein Kollabieren aufgrund des äußeren Atmosphärendrucks abstützt.

2. Scheibenelement (10) nach Anspruch 1,
wobei die erste Scheibe (12) eintplane Floatglas-Scheibe oder eine plane lichtdurchlässige Kunststoffscheibe ist.

3. Scheibenelement (10) nach Anspruch 1 oder 2,
wobei die Vorsatzscheibe (14) auf der sonnenabgewandten Seite (10a) der ersten Scheibe (12) angebracht ist.

4. Scheibenelement (10) nach einem der vorstehenden Ansprüche, wobei die Vorsatzscheibe (14) mit den Stützelementen (26, 26',26" ,26"') und dem Randbereich (18) aus einer Kunststoffplatte tiefgezogen oder einstückig spritzgeformt ist.

5. Scheibenelement (10) nach einem der vorstehenden Ansprüche, wobei die Vorsatzscheibe (14) aus PMMA, PVC PETG, Polycarbonat, Epoxid, Polyester oder Glasfaserkunststoff hergestellt ist.

6. Scheibenelement (10) nach einem der vorstehenden Ansprüche, wobei die Vorsatzscheibe (14) mit einem Klebstoff (46) zwischen der Dichtfläche (44) und der ersten Scheibe (12) auf die erste Scheibe (12) geklebt ist.

7. Scheibenelement (10) nach Anspruch 6,
wobei die Stützelemente (26, 26' , 26" , 26"') im verklebten aber noch nicht evakuierten Zustand von der ersten Scheibe (12) beabstandet sind und erst durch den äußeren Atmosphärendruck aufgrund der Evakuierung an der ersten Scheibe (12) zur Anlage kommen.

8. Scheibenelement (10) nach einem der vorstehenden Ansprüche, wobei in dem Fensterbereich (16) integrale Stabilisierungsrippen (24) aus der Vorsatzscheibe (14) ausgeformt sind, welche sich parallel zu der Ebene des Fensterbereichs (F) erstrecken und ein zweidimensional gekreuztes Liniengitter (22) bilden und den Fensterbereich (16) in eine Vielzahl von Feldern (20) unterteilen, wobei das Liniengitter (22) auch in dem evakuierten Zustand zumindest nicht vollständig an der ersten Scheibe (12) anliegt, damit die Hohlraumzellen der jeweiligen Felder (20) miteinander verbunden sind.

9. Scheibenelement (10) nach Anspruch 8,
wobei die Stützelemente (26, 26', 26" , 26"') an den Kreuzungsstellen des Liniengitters (22) angeordnet sind, so dass eine zweidimensional gekreuzte Brückenstruktur gebildet wird, wobei die Stützelemente (26, 26', 26", 26"') als Brückenpfeiler und die Stabilisierungsrippen (24) als Brückenbögen zwischen den Brückenpfeilern wirken.

10. Scheibenelement (10) nach Anspruch 8 oder 9,
wobei die Vorsatzscheibe (14) in den Feldern (20) jeweils feldweise gewölbt ist.

11. Scheibenelement (10) nach einem der vorstehenden Ansprüche, wobei auf die der ersten Scheibe (12) abgewandte Seite (10a) der Vorsatzscheibe (14) eine Platte oder Folie (30) aufgebracht ist.

12. Scheibenelement nach Anspruch 11,
wobei die Platte oder Folie (30) vollständig umlaufend hermetisch mit einem Rücken des Randbereiches (18) der Vorsatzscheibe (14) verbunden ist und der Zwischenraum (40) zwischen der Vorsatzscheibe (14) und der Platte oder Folie (30) evakuiert ist.

13. Vorsatzscheibe (14) zur Herstellung eines mehrschichtigen wärmeisolierenden Scheibenelements (10) ausgehend von einer Glasscheibe (12) durch Aufkleben der Vorsatzscheibe (14) auf die Glasscheibe (12), **dadurch gekennzeichnet dass** die Vorsatzscheibe (14) eine wannenartige Form mit einem inneren Fensterbereich (16) und einen um den Fensterbereich (16) umlaufenden Randbereich (18) bildet, dass der Randbereich (18) einen Dichtrahmen (43) mit einer umlaufenden Dichtfläche (44) und einen den Dichtrahmen (43) mit dem Fensterbereich (16) verbindenden Verbindungsrahmen (48) aufweist, dass sich der Verbindungsrahmen (48) senkrecht oder schräg zu der Ebene (F) des Fensterbereichs (16) erstreckt, so dass der Fensterbereich (16) parallel versetzt in Bezug auf die Ebene (F) verläuft,
dass die Vorsatzscheibe (14) mit der Dichtfläche (44) vollständig umlaufend hermetisch auf die Glasscheibe (12) aufklebbar ist, so dass der Fensterbereich (16) größtenteils von der Glasscheibe (12) beabstandet ist und in dem Fensterbereich (16) ein vakuumdichter Hohlraum (34) zwischen der Glasscheibe (12) und der Vorsatzscheibe (14) sandwichartig eingeschlossen ist, wenn die Vorsatzscheibe (14) auf die Glasscheibe (12) aufgeklebt ist,
dass der Fensterbereich (16) eine Vielzahl von Stützeelementen (26, 26', 26", 26"') aufweist,
dass die Vorsatzscheibe (14) als ein Kunststoffformteil ausgebildet ist und die Stützelemente sich in Richtung der Ebene (E) der Dichtfläche (44) erstreckend integral mit der Vorsatzscheibe (14) geformt sind und ein Stützraster (28) mit einem vordefinierten Maximalabstand zwischen den Stützelementen bilden,
und dass das Stützraster (28) der Vorsatzscheibe (14) hinreichend stabil ist, um die Vorsatzscheibe und die Glasscheibe (12) gegeneinander gegen ein Kollabieren aufgrund des äußeren Atmosphärendrucks abzustützen, wenn der Hohlraum (34) evakuiert wird.

14. Vorsatzscheibe (14) nach Anspruch 13,
**gekennzeichnet durch** einen integral angeformten Absaugstutzen (32) oder ein Vakuumventil zum Evakuieren des Hohlraums (34) mit einer Vakuumpumpe.

15. Verfahren zur Herstellung des mehrschichtigen wärmeisolierenden Scheibenelements (10) nach einem der Ansprüche 1 bis 12 im Wege der Nachrüstung von bereits eingebauten Scheiben (12) vor Ort, **gekennzeichnet durch** folgende Schritte, welche am Ort der Nachrüstung durchgeführt werden:
Bereitstellen der Vorsatzscheibe (14) nach Anspruch 14 und einer Vakuumpumpe,
Aufkleben der Vorsatzscheibe (14) auf die bereits in der Rahmenkonstruktion (36) eingebaute Scheibe (12),
Anschließen der Vakuumpumpe an den Absaugstutzen oder das Vakuumventil,
Evakuieren des Hohlraums (34) zwischen der Vorsatzscheibe (14) und der Scheibe (12) **durch** den Absaugstutzen (32) oder das Vakuumventil mittels der Vakuumpumpe,
Verschließen des Absaugstutzens (32) oder des Vakuumventils,
Entfernen der Vakuumpumpe.

## Claims

1. A multi-layered heat insulating window panel (10), especially for installation in the frame structure (36) of a greenhouse to form the wall and/or roof surfaces of the greenhouse, comprising:
a first pane (12) and
a supplementary pane (14) on at least one surface of the first pane (12), forming at least one double-glazing arrangement,
**characterized in that** the double-glazing arrangement comprises an assembly edge (53) which can be framed and attached in the frame structure (36) and which is kept in position by the frame structure (36) after being installed, that the supplementary pane (14) has a tray-like shape with an inner window area (16) and an edge region (18) surrounding the window area, that the edge region (18) has a sealing frame (43) with a circumferential sealing surface (44) and a connecting frame (48) which connects the sealing frame (43) with the window area (16), that the connecting frame (48) extends vertically or transverse to the window plane (E) so that the window area (16) is offset in parallel in relation to the window plane (E) and the window area (16) is mostly spaced apart from the first pane (12), forming a sandwich-like hollow space (34) in the window area (16) between the first pane (12) and the supplementary pane (14), that the sealing surface (44) forms a complete circumferential hermetic connection with the first pane (12) so that the hollow space (34) between the first pane (12) and the supplementary pane (14) is closed in vacuum-tight manner, that the window area (16) comprises a plurality of supporting elements (26, 26', 26", 26"') protruding from the plane (F) of the window area, and that the supplementary pane (14) is designed in the form of a plastic molding, and the supporting elements in the direction of the first pane (12) are formed as an integral part of the supplementary pane (14) and form a supporting grid (28) with a predefined maximum spacing between the supporting elements, and that the hollow space (34) is evacuated, and that the supporting grid (28) of the supplementary pane (14) firmly supports the supplementary pane (14) and the first pane (12) against each other in order to prevent the panes from collapsing because of the external atmospheric pressure.

2. The window panel (10) according to Claim 1, whereas the first pane (12) is a planar float glass pane, or a planar translucent plastic sheet.

3. The window panel (10) according to Claim 1 or 2, whereas the supplementary pane (14) is installed on the surface (10a) of the first pane (12), facing away from the sun.

4. The window panel (10) according to one of the preceding claims, whereas the supplementary pane (14) with the supporting elements (26, 26', 26", 26"'), and the edge region (18) is deep drawn or integrally molded from a plastic sheet.

5. The window panel (10) according to one of the preceding claims, whereas the supplementary pane (14) is made of PMMA, PVC, PETG, polycarbonate, epoxy, polyester, or fiber glass plastic material.

6. The window panel (10) according to one of the preceding claims, whereas the supplementary pane (14) is glued with an adhesive (46) to the first pane (12) between the sealing surface (44), and the first pane (12).

7. The window panel (10) according to Claim 6, whereas the supporting elements (26, 26', 26", 26''') are spaced apart from the first pane (12) in glued but not yet evacuated condition, and only rest on the first pane (12) through the external atmospheric pessure resulting from evacuation.

8. The window panel (10) according to one of the preceding claims, whereas in the window area (16) integral stabilizing ribs (24) are molded in the supplementary pane (14) which ribs extend parallel to the plane of the window area (F) and form a two-dimensional crossed line grid (22), and divide the window area in several fields (20), whereas even in evacuated condition the line grid (22) does not completely rest against the first pane (12) pane so that the hollow space cells of the respective fields (20) are connected to one another.

9. The window panel (10) according to Claim 8, whereas the supporting elements (26, 26', 26", 26"') are arranged at the intersections of the line grid (22), forming a two-dimensional crossed bridge structure, whereas the supporting elements (26, 26', 26", 26"') are acting as bridge pillars, and the stabilizing ribs (24) as arches between the bridge pillars.

10. The window panel (10) according to Claim 8 or 9, whereas the supplementary pane (14) is warped in each of the fields (20).

11. The window panel (10) according to one of the preceding claims, whereas a sheet or foil (30) is applied to the surface (10a) of the supplementary pane (14), facing away from the first pane (12).

12. The window panel (10) according to Claim 11, whereas the complete circumference of the sheet or foil (30) is hermetically connected with a ridge of the edge region (18) of the supplementary pane (14), and the space (40) between the supplementary pane (14) and the sheet or foil (30) is evacuated.

13. A supplementary pane (14) for producing a multi-layered heat insulating window panel (10) by, starting with one glass pane (12), gluing the supplementary pane (14) to the glass pane (12), **characterized in that** the supplementary pane (14) has a tray-like shape with an inner window area (16), and an edge region (18) surrounding the window area (16), that the edge region (18) has a sealing frame (43) with a circumferentially sealing surface (44) and a connecting frame (48) which connects the sealing frame (43) with the window area (16), that the connecting frame (48) extends vertically or transverse to the plane (F) of the window area (16) so that the window area (16) is offset in parallel in relation to the plane (F), that the supplementary pane (14) with the sealing surface (44) can be hermetically glued all the way around the glass pane (12) so that the window area (16) is mostly spaced apart from the glass pane (12), and a vacuum-tight hollow space (34) is in sandwich-like manner formed in the window area (16) between the glass pane (12) and the supplementary pane (14) when the supplementary pane (14) is glued to the glass pane (12), that the window area (16) comprises several supporting elements (26, 26', 26" , 26"'), that the supplementary pane (14) is designed in the form of a plastic molding and the supporting elements are an integral part of the supplementary pane (14), extending in the direction of plane (E) of the sealing surface (44), and forming a supporting grid (28) with a predefined maximum space between the supporting elements, that the supporting grid (28) of the supplementary pane (14) is sufficiently stable in order to support the supplementary pane and the glass pane (12) against each other to prevent the panes from collapsing because of the external atmospheric pressure that results from the hollow space (34) being evacuated.

14. The supplementary pane (14) according to Claim 13, **characterized by** an integrally molded suction nozzle (32), or a vacuum valve for evacuating the hollow space (34) by means of a vacuum pump.

15. A method for producing the multi-layered heat insulating window panel (10) according to claims 1 to 12 by retrofitting on site already installed glass panes (12), **characterized by** the following steps being performed at the site of retrofitting:
Providing the supplementary pane (14) according to claim 13, and a vacuum pump,
Gluing the supplementary pane (14) to the pane (12) already installed in the frame structure (36),
Connecting the vacuum pump to the suction nozzle, or the vacuum valve,
Evacuating the hollow space (34) between the supplementary pane (14), and the pane (12) through the suction nozzle (32), or the vacuum valve, by means of the vacuum pump,
Closing the suction nozzle (32), or the vacuum valve,
Removing the vacuum pump.

## Revendications

1. Elément de vitrage (10) multicouche thermo-isolant, destiné en particulier au montage dans la structure de cadre (36) d'une serre, pour former les surfaces de paroi et/ou de toit de la serre, comprenant :
une première vitre (12), et
une vitre additionnelle (14) sur au moins un côté de la première vitre (12), de manière à former au moins un système de double vitrage,
**caractérisé par le fait que** le système de double vitrage présente un bord de montage (53) qui peut être inséré et fixé dans la structure de cadre (36) et, à l'état monté, est maintenu par la structure de cadre (36),
**par le fait que** la vitre additionnelle (14) a une forme de cuvette, avec une zone de fenêtre (16) intérieure et une zone de bord (18) entourant la zone de fenêtre, **par le fait que** la zone de bord (18) présente un cadre étanche (43), avec une surface d'étanchéité (44) périphérique, et un cadre de liaison (48) reliant le cadre étanche (43) à la zone de fenêtre (16), **par le fait que** le cadre de liaison (48) s'étend perpendiculairement ou en biais par rapport au plan de vitre (E), de sorte que la zone de fenêtre (16) est décalée parallèlement au plan de vitre (E) et la zone de fenêtre (16) est espacée sur sa plus grande partie de la première vitre (12), de sorte que dans la zone de fenêtre (16), un espace creux (34) est pris en sandwich entre la première vitre (12) et la vitre additionnelle (14),
**par le fait que** la surface d'étanchéité (44) est liée de façon hermétique sur tout le pourtour à la première vitre (12), de sorte que l'espace creux (34) entre la première vitre (12) et la vitre additionnelle (14) est fermé de manière étanche au vide,
**par le fait que** la zone de fenêtre (16) présente une pluralité d'éléments d'appui (26, 26', 26", 26"') faisant saillie à partir du plan (F) de la zone de fenêtre, et
**par le fait que** la vitre additionnelle (14) est réalisée sous forme de pièce moulée en matière plastique, et les éléments d'appui sont réalisés d'un seul tenant avec la vitre additionnelle (14), en s'étendant en direction de la première vitre (12), et forment un réseau d'appui (28) avec une distance maximale prédéfinie entre les éléments d'appui,
et **par le fait que** le vide est produit dans l'espace creux (34) et le réseau d'appui (28) de la vitre additionnelle soutient de manière stable l'une vis-à-vis de l'autre la vitre additionnelle (14) et la première vitre (12), afin d'éviter la rupture sous l'effet de la pression atmosphérique extérieure.

2. Elément de vitrage (10) selon la revendication 1, dans lequel la première vitre (12) est une vitre plane de verre flotté ou une vitre transparente en matière plastique.

3. Elément de vitrage (10) selon la revendication 1 ou 2, dans lequel la vitre additionnelle (14) est disposée sur la face (10a) de la première vitre (12) qui est opposée au soleil.

4. Elément de vitrage (10) selon une des revendications précédentes, dans lequel la vitre additionnelle (14), comportant les éléments d'appui (26, 26', 26", 26"') et la zone de bord (18), est réalisée par emboutissage d'une plaque en matière plastique ou est moulée d'une seule pièce par injection.

5. Elément de vitrage (10) selon une des revendications précédentes, dans lequel la vitre additionnelle (14) est réalisée en PMMA, PVC, PETG, polycarbonate, résine époxy, polyester ou en matière plastique renforcée aux fibres de verre.

6. Elément de vitrage (10) selon une des revendications précédentes, dans lequel la vitre additionnelle (14) est collée sur la première vitre (12) à l'aide d'un adhésif (46) disposé entre la surface d'étanchéité (44) et la première vitre (12).

7. Elément de vitrage (10) selon la revendication 6, dans lequel, à l'état collé mais pas encore sous vide, les éléments d'appui (26, 26', 26", 26"') sont espacés de la première vitre (12) et ne viennent en appui contre la première vitre (12) que sous l'action de la pression atmosphérique extérieure, suite à la production du vide.

8. Elément de vitrage (10) selon une des revendications précédentes, dans lequel des nervures de stabilisation (24) intégrées sont façonnées dans la vitre additionnelle (14), dans la zone de fenêtre (16), s'étendent parallèlement au plan de la zone de fenêtre (F), forment un réseau linéaire (22) croisé dans deux dimensions et divisent la zone de fenêtre (16) en une multitude de champs (20), le réseau linéaire (22), même à l'état sous vide, n'étant du moins pas appliqué complètement contre la première vitre (12), afin que les cellules de l'espace creux des champs (20) concernés soient reliées entre elles.

9. Elément de vitrage (10) selon la revendication 8, dans lequel les éléments d'appui (26, 26', 26", 26"') sont disposés aux points d'intersection du réseau linéaire (22), de manière à former une structure de ponts croisée dans deux dimensions, les éléments d'appui (26, 26', 26", 26"') agissant comme piles de pont et les nervures de stabilisation (24) comme travées de pont entre les piles.

10. Elément de vitrage (10) selon la revendication 8 ou 9, dans lequel la vitre additionnelle (14) est incurvée dans les champs (20), respectivement dans chaque champ.

11. Elément de vitrage (10) selon une des revendications précédentes, dans lequel une plaque ou une feuille (30) est appliquée sur la face (10a) de la vitre additionnelle (14) qui est éloignée de la première vitre (12).

12. Elément de vitrage (10) selon la revendication 11, dans lequel la plaque ou la feuille (30) est reliée de façon hermétique sur tout le pourtour à une partie dorsale de la zone de bord (18) de la vitre additionnelle (14), et le vide est créé dans l'espace (40) entre la vitre additionnelle (14) et la plaque ou la feuille (30).

13. Vitre additionnelle (14) pour fabriquer un élément de vitrage (10) multicouche thermo-isolant, en partant d'une vitre de verre (12), par collage de la vitre additionnelle (14) sur la vitre de verre (12), **caractérisée par le fait que** la vitre additionnelle (14) a une forme de cuvette, avec une zone de fenêtre (16) intérieure et une zone de bord (18) entourant la zone de fenêtre (16), **par le fait que** la zone de bord (18) présente un cadre étanche (43), avec une surface d'étanchéité (44) périphérique, et un cadre de liaison (48) reliant le cadre étanche (43) à la zone de fenêtre (16), **par le fait que** le cadre de liaison (48) s'étend perpendiculairement ou en biais par rapport au plan (F) de la zone de fenêtre (16), de sorte que la zone de fenêtre (16) est décalée parallèlement au plan (F),
**par le fait que** la vitre additionnelle (14) peut être collée avec la surface d'étanchéité (44) de façon hermétique sur tout le pourtour sur la vitre de verre (12), de manière à ce que la zone de fenêtre (16) soit espacée sur sa plus grande partie de la vitre de verre (12) et, dans la zone de fenêtre (16), un espace creux (34) étanche au vide soit pris en sandwich entre la vitre de verre (12) et la vitre additionnelle (14), lorsque la vitre additionnelle (14) est collée sur la vitre de verre (12),
**par le fait que** la zone de fenêtre (16) présente une pluralité d'éléments d'appui (26, 26', 26", 26"'),
**par le fait que** la vitre additionnelle (14) est réalisée sous forme de pièce moulée en matière plastique et les éléments d'appui sont réalisés d'un seul tenant avec la vitre additionnelle (14), en s'étendant en direction du plan (E) de la surface d'étanchéité (44), et forment un réseau d'appui (28) avec une distance maximale prédéfinie entre les éléments d'appui,
et **par le fait que** le réseau d'appui (28) de la vitre additionnelle (14) est suffisamment stable pour fournir un appui réciproque à la vitre additionnelle et à la vitre de verre (12), afin d'éviter une rupture sous l'effet de la pression atmosphérique extérieure, au moment de la production du vide dans l'espace creux (34).

14. Vitre additionnelle (14) selon la revendication 13, **caractérisée par le fait qu'**elle comporte un raccord d'aspiration (32) réalisé d'une seule pièce avec elle, ou une valve de mise sous vide, pour produire le vide dans l'espace creux (34), à l'aide d'une pompe à vide.

15. Procédé de fabrication de l'élément de vitrage (10) multicouche thermo-isolant selon une des revendications 1 à 12, dans le cadre de l'équipement ultérieur, sur place, de vitres (12) déjà installées, **caractérisé par le fait qu'**il comprend les étapes suivantes, exécutées sur le lieu de l'équipement ultérieur :
préparation de la vitre additionnelle (14) selon la revendication 14 et d'une pompe à vide,
collage de la vitre additionnelle (14) sur la vitre (12) déjà montée dans la structure de cadre (36),
raccordement de la pompe à vide au raccord d'aspiration ou à la valve de mise sous vide,
mise sous vide de l'espace creux (34) entre la vitre additionnelle (14) et la vitre (12), par l'intermédiaire du raccord d'aspiration (32) ou de la valve de mise sous vide, au moyen de la pompe à vide,
fermeture du raccord d'aspiration (32) ou de la valve de mise sous vide,
retrait de la pompe à vide.
